# EUROPEAN PATENT APPLICATION

(11) **EP 2 545 879 A2**
(43) Date of publication of application: **16.01.2013**
(21) Application number: 11718126.3
(22) Date of filing: 02.03.2011
(51) Int. Cl.: A61C 8/00

(54) **EXPANDER TOOL FOR APPLYING TORQUE TO A DENTAL IMPLANT**

(30) Priority: 10.03.2010 ES 201000305
(71) Applicant: Biotechnology Institute, I Mas D, S.L., 01005 Vitoria (Álava) (ES)
(72) Inventor: ANITUA ALDECOA, Eduardo, E-01005 Vitoria (ES)
(74) Representative: Urteaga Simarro, José Antonio
(86) International application number: PCT/ES2011/000056
(87) International publication number: WO 2011/110702

(57) **Abstract**

Extension tool (1) for applying torque to a dental implant, which comprises an elongated body (2), means of connection to a dental implant at one end of the body (2), means of connection to a torque wrench at the other end of the body (2), and a longitudinal through hole (8) for the insertion of a screw designed to be screwed into a blind threaded hole in the dental implant and ensure the correct alignment between the extension tool (1) and the dental implant. The extension tool (1) according to the invention allows very high torques to be applied to the dental implant, the tool being therefore suitable for extracting the dental implant.

## Description

### Technical field

The invention relates to an extension tool for applying a torque to a dental implant, which enables a high torque to be applied in a comfortable manner and by means of a suitable tool to the dental implant so that it may be tightened (implantation) or loosened (extraction).

### Prior art

A dental implant is a part designed to be inserted in a patient's maxillary bone or jaw bone and to then support the temporary or permanent connection of a dental prosthesis or other type of related component. Prior to the installation of the implant, a bone preparation process must be carried out, which must comprise the drilling of an alveolus capable of receiving the implant, besides other optional procedures such as the widening and/or regeneration of the bone. When the alveolus has been prepared the implant must be transported and inserted into it, and then threaded by means of a suitable instrument. Such tasks, in particular the inserting and threading of the implant, are occasionally relatively uncomfortable and difficult to perform, especially when the alveolus is situated in areas of the mouth that are difficult for the surgeon to access.

Sets of parts are normally used in order to transport, insert and thread the implant. These sets are temporarily connected to the dental implant and make it easier to handle and transport to the alveolus. Said sets of parts usually have an elongated arrangement to make the implant easier to insert. They also comprise, on their free end, means for connecting a torque wrench. The torque wrench allows forcing the rotation of the set of parts and the dental implant, so that the dental implant is threaded into the alveolus. Once the dental implant has been threaded, the set of parts is removed from the dental implant and taken out of the patient's mouth. An example of this type of set of auxiliary parts can be seen in patent EP1234550. In this patent, the set is made up of three parts: a casing or sort of sleeve, which is connected to the head of the implant and has a longitudinal through hole; a shaft that passes through the longitudinal through hole of the casing and is threaded at one end in the interior of the implant and projects out of the casing at the other end; and a connector that is connected to the end of the shaft that projects out, and which at its opposite end comprises means of connection to a power wrench for applying torque to the set.

The quantities of torque that the carrier unit above is able to apply to the dental implant are relatively small (a maximum of around 150 Ncm). High torque values are not necessary because the implant does not need to be tightened securely in the bone to achieve a strong connection with it; rather, the connection strength is acquired during the process of osseointegration that occurs in the weeks after the implant is fitted in the bone. Carrier units are not, therefore, designed to withstand elevated torques. This is equivalent to saying that carrier units suffer damage when such high torques are applied to them.

The applicant has recently designed a method for extracting implants that comprises the fundamental step of applying a very high torque to the implant in order to break the implant-bone connection (particularly, if the implant is threaded into the bone, said torque is applied to the implant in the opposite direction to the direction of the thread between the implant and the bone). Said method requires the application of very high torques such as 350 Ncm, and cannot therefore be executed with the aforementioned carrier units.

It is an objective of this invention to provide a tool that enables high torques to be applied to a dental implant, while also guaranteeing that neither the tool nor the dental implant will suffer damage or break as a result of said torques. Said tool will thus be able to be used to apply sufficiently high torques to the implant in order to break the implant-bone connection and subsequently extract the implant.

### Brief description of the invention

It is an object of this invention to provide an extension tool for applying a torque to a dental implant, wherein the extension tool comprises an elongated body, means of connection to a dental implant at one end of the body and means of connection to a torque wrench at the other end of the body. As a result, the tool according to the invention, in a single part, performs the task of lengthening or extending the head of the dental implant. In consequence, the surgeon can then access more easily with a torque wrench, thereby safeguarding the patient's teeth and preventing the torque wrench from hitting and damaging them.

The tool will be commonly used to enable a torque to be applied to the dental implant once it has been placed over and initially inserted into the alveolus. In addition, because of the tool's capacity to withstand high torques, it is suitable to be used to extract dental implants simply by unthreading them from the bone (for this procedure, it is essential that very high torques, so high that a conventional tool is unable to withstand, are applied). By means of the inventive tool, however, very high torques (e.g. 350 Ncm) may be applied that, when applied in a direction opposite to the thread between the dental implant and the bone, provide the dental implant with the ability to break the strong connection between it and the bone and unthread itself from the bone in a manner that is practically atraumatic. Alternatively, in the event that the implant is not threaded to the bone, these very high torque values enable the connection between the implant and the bone to be broken, allowing the direct extraction of the implant. This application is of great importance and clinical interest, given the virtual impossibility at this moment in time of extracting dental implants in an atraumatic manner once they have osseointegrated.

### Description of the drawings

Details of the invention can be seen in the accompanying non-limiting drawings:
- Figure 1 shows an elevated partial cross-sectional view of an embodiment of the extension tool according to the invention.
- Figures 2 and 3 respectively show the right and left side view of the tool of Figure 1.

### Detailed description of the invention

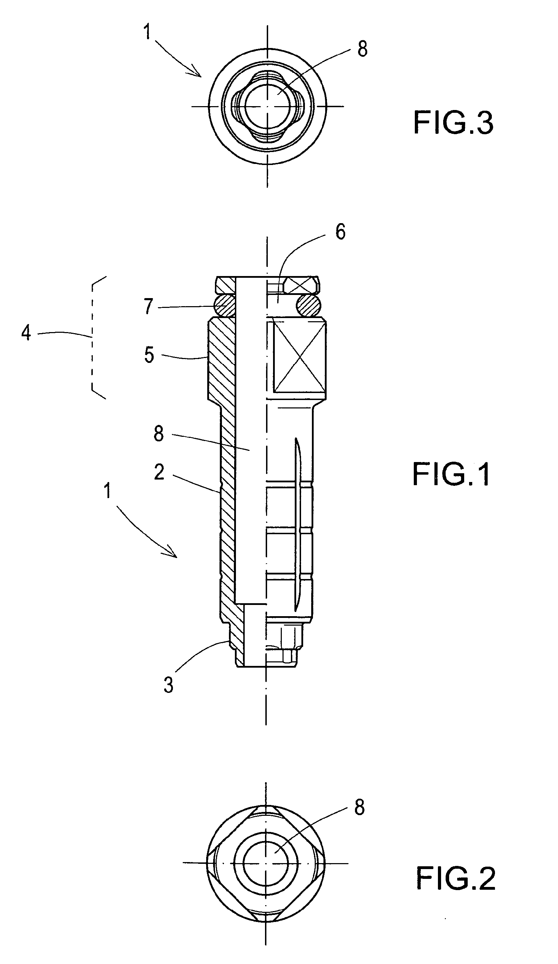

Figure 1 shows an elevated partial cross-sectional view of an embodiment of the extension tool according to the invention. Said view is complemented by the right and left side views shown in Figures 2 and 3. As shown in the figures, the extension tool (1) comprises an elongated body (2), by means of which the tool is able to lengthen or extend the head of the dental implant. In addition, the extension tool (1) comprises means of connection to a dental implant at one end of the body (2) and means of connection to a torque wrench at the other end of the body (2). As a result, the inventive tool allows a surgeon to apply torque to the head of the implant with the torque application tool in a relatively distant position, thereby safeguarding the patient's teeth and reducing the risk of the torque application tool damaging them.

Preferably, the means of connection to a dental implant comprise a male end fitting (3) designed to be connected to the internal connection of a dental implant provided with such an internal connection. The internal connection (in comparison with the external connection of other implants) is especially capable, due to its mechanical characteristics, of withstanding the application of high torques in order to extract the implant. An example of an internal connection is shown in WO2006109176. The male end fitting (3) of Figures 1 to 3 of the present application is designed, in particular, to be connected to the internal connection of the preferred embodiment of said document WO2006109176. The invention contemplates other embodiments of the male end fitting (3), however, designed to be connected to different internal connections.

Preferably, as shown, the means of connection to a torque wrench comprise an anti-rotational head (4), which is also provided with an anti-rotational area (5), as shown in Figure 1. In terms of cost-performance, said anti-rotational head (4) is the most efficient way of connecting a torque wrench to the extension tool (1). Especially advantageous is the fact that the anti-rotational area (5) has a substantially square cross-section, as shown in the figures, or a hexagonal cross-section. Both shapes are relatively easy to manufacture and enable the transmission of very high torques from the torque wrench to the extension tool.

In an equally preferred manner, the anti-rotational head (4) comprises a neck (6) provided with an O-ring seal (7). Said neck (6), the O-ring seal (7) and the anti-rotational area (5) are designed to be housed in a cavity of the torque application tool. The function of the O-ring seal (7) is to contact with a slight friction against the inner walls of said cavity and offer a certain amount of resistance so that the torque application tool does not come away from the extension tool (1) unless a slight amount of force is applied to it. The gripping between both tools allows the extension tool (1) to be used to transport the dental implant and not just to act as an extending member.

The extension tool (1) according to the invention also comprises a longitudinal through hole (8). Said hole allows the insertion of a screw, not shown in the figures, designed to be screwed into the blind threaded hole of the dental implant and ensure the correct alignment between the extension tool (1) and the dental implant. The alignment between the dental implant and the extension tool (1) is a key factor in the transmission of very high torques from the latter to the former. Should they not be correctly aligned and a high torque is applied to the extension tool, the means of connection to the dental implant (in the preferred embodiment, the male end fitting (3) designed to be connected to the internal connection of a dental implant) may be deformed in a plastic manner and become rounded and lose the ability to resist the torque. It must also be remembered that in cases in which the implant-bone connection is especially strong and it is necessary to apply especially high torques, the extension tool (1) tends to become misaligned in relation to the implant. It is for this reason that the internal screw that keeps the extension tool (1) and the implant aligned at all times is especially useful as the surgeon does not have to worry about maintaining said alignment while applying the high torque and may therefore concentrate on nothing else but applying the torque. As a result, even in difficult situations, the extraction of the implant turns out to be extremely simple.

## Claims

1. Extension tool (1) for applying torque to a dental implant, **characterised in that** it comprises:
- an elongated body (2),
- means of connection to a dental implant at one end of the body (2),
- means of connection to a torque wrench at the other end of the body (2),
- a longitudinal through hole (8) for the insertion of a screw designed to be screwed into a blind threaded hole of the dental implant and ensure the correct alignment between the extension tool (1) and the dental implant.

2. Extension tool (1) according to claim 1, wherein the means of connection to a dental implant comprise a male end fitting (3) designed to be connected to the internal connection of a dental implant provided with such an internal connection.

3. Extension tool (1) according to claim 1, wherein the means of connection to a torque wrench comprise an anti-rotational head (4) that comprises an anti-rotational area (5).

4. Extension tool (1) according to claim 3, wherein the anti-rotational area (5) has a substantially square cross-section.

5. Extension tool (1) according to claim 3, wherein the anti-rotational area (5) has a substantially hexagonal cross-section.

6. Extension tool (1) according to claim 3, wherein the anti-rotational head (4) further comprises a neck (6) provided with an O-ring seal (7).
